# EUROPÄISCHE PATENTSCHRIFT

(11) **EP 1 190 321 B1**
(45) Veröffentlichungstag und Bekanntmachung des Hinweises auf die Patenterteilung: **13.11.2002**
(21) Anmeldenummer: 00938506.3
(22) Anmeldetag: 25.04.2000
(51) Int. Cl.: G06F 11/00

(54) **VERFAHREN, ANORDNUNG UND COMPUTERPROGRAMM ZUM VERGLEICH EINER ERSTEN SPEZIFIKATION MIT EINER ZWEITEN SPEZIFIKATION**
METHOD, ARRANGEMENT AND COMPUTER PROGRAM FOR COMPARING A FIRST SPECIFICATION WITH A SECOND SPECIFICATION
PROCEDE, DISPOSITIF ET PROGRAMME INFORMATIQUE DESTINES A LA COMPARAISON D'UNE PREMIERE SPECIFICATION AVEC UNE SECONDE SPECIFICATION

(30) Priorität: 10.05.1999 DE 19921446
(43) Veröffentlichungstag der Anmeldung: 27.03.2002
(73) Patentinhaber: SIEMENS AKTIENGESELLSCHAFT, 80333 München (DE)
(72) Erfinder: ZIMMERER, Peter, D-81737 München (DE)
(86) Internationale Anmeldenummer: DE0001271
(87) Internationale Veröffentlichungsnummer: WO00068789

(56) Entgegenhaltungen:
- US-A- 5 649 180
- ZAVE P ET AL: "WHERE DO OPERATIONS COME FROM? A MULTIPARADIGM SPECIFICATION TECHNIQUE" IEEE TRANSACTIONS ON SOFTWARE ENGINEERING,US,IEEE INC. NEW YORK, Bd. 22, Nr. 7, 1. Juli 1996 (1996-07-01), Seiten 508-528, XP000639382 ISSN: 0098-5589
- VAN HEE K ET AL: "PROOFS: APPLICATION ENGINEERING BASED ON FORMAL METHODS" MICROPROCESSING AND MICROPROGRAMMING,NL,ELSEVIER SCIENCE PUBLISHERS, BV., AMSTERDAM, Bd. 35, Nr. 1 / 05, 1. September 1992 (1992-09-01), Seiten 29-36, XP000325047 ISSN: 0165-6074
- BASHAR NUSEIBEH ET AL: "A FRAMEWORK FOR EXPRESSING THE RELATIONSHIPS BETWEEN MULTIPLE VIEWSIN REWUIREMENTS SPECIFICATION" IEEE TRANSACTIONS ON SOFTWARE ENGINEERING,US,IEEE INC. NEW YORK, Bd. 20, Nr. 10, 1. Oktober 1994 (1994-10-01), Seiten 760-773, XP000485368 ISSN: 0098-5589

## Beschreibung

Die Erfindung betrifft ein Verfahren, eine Anordnung und ein Computerprogramm zum Vergleich einer ersten Spezifikation mit einer zweiten Spezifikation, wobei die erste Spezifikation und die zweite Spezifikation jeweils mindestens zwei Prozesse umfassen, deren jeder mindestens zwei Ereignisse enthält.

In zunehmendem Maße werden Rechner in einem Rechnernetz, einem sogenannten Rechnerverbund, eingesetzt, um an verschiedenen Positionen zumindest einen Teil der in dem Rechnerverbund verfügbaren Dienste nutzbar zu machen. In diesem Zusammenhang ist die Kommunikation der einzelnen Rechner untereinander, bzw. unabhängig von einander ablaufender Programme auf einem Rechner, eine wesentliche Eigenschaft, die insbesondere durch die Möglichkeit einer nebenläufigen Bearbeitung eine effiziente, schnelle und damit äußerst ökonomische Arbeitsweise zuläßt.

Ein Beispiel für einen solchen Rechnerverbund stellt das Internet dar, das eine Vielzahl von Rechnern miteinander verbindet. Insbesondere werden dabei mehrere Prozesse eines Rechners, die unabhängig voneinander ablaufen, als Teilnehmer in dem Rechnerverbund ausgewiesen.

Bei einer parallelen Abarbeitung bzw. Bearbeitung von Prozessen (Nebenläufigkeit) kann es vielfach zu Effekten kommen, die gerade im Zusammenspiel der Prozesse miteinander schwer bis gar nicht vorhersehbar sind (vergleiche insbesondere [1]). Auch ist ein Test des gesamten Rechnerverbundes auf alle Möglichkeiten bzw. Zustände in der Praxis nicht realisierbar.

Bei jeder Art von Nebenläufigkeit ist es oftmals von entscheidender Bedeutung, angeben zu können, ob zweierlei Nebenläufigkeiten dieselbe Semantik haben. Die Reihenfolge der aufgetretenen Ereignisse kann (und wird in der Regel auch) bei jedem Ablauf variieren. Trotzdem sind diese Ablauffolgen semantisch äquivalent, wenn die Reihenfolgeveränderungen nur bei den nebenläufigen Ereignissen auftreten. Ein solcher Vergleich ist in einem hinreichend großen System nur mit sehr hohem Aufwand durchzuführen und dabei extrem fehleranfällig.

Die **Aufgabe** der Erfindung besteht darin, einen Vergleich einer ersten Spezifikation mit einer zweiten Spezifikation zu ermöglichen, der automatisch abläuft und bei dem insbesondere Nebenläufigkeiten von Prozessen mitberücksichtigt werden.

Diese Aufgabe wird gemäß den Merkmalen der unabhängigen Patentansprüche gelöst.

Zur Lösung der Aufgabe wird ein Verfahren zum Vergleich einer ersten Spezifikation mit einer zweiten Spezifikation angegeben, wobei die erste Spezifikation und die zweite Spezifikation jeweils mindestens zwei Prozesse umfassen, deren jeder mindestens zwei Ereignisse enthält. Es wird ein erster Vergleich der Ereignisse der Prozesse der ersten Spezifikation mit den Ereignissen der Prozesse der zweiten Spezifikation durchgeführt. Vorzugsweise werden implizit zunächst die einander zugehörigen Ereignisse der Prozesse der beiden Spezifikationen bestimmt. Ferner wird (darauf aufbauend) ein zweiter Vergleich von Beziehungen zwischen den Ereignissen der Prozesse der ersten Spezifikation mit Beziehungen zwischen den zugehörigen Ereignissen (die "Zugehörigkeit" wurde insbesondere im ersten Vergleich ermittelt) der Prozesse der zweiten Spezifikation durchgeführt. Eine Verschiedenartigkeit der ersten Spezifikation von der zweiten Spezifikation wird bestimmt, wenn der erste oder der zweite Vergleich eine Ungleichheit ergibt. Falls keine solche Ungleichheit ermittelt wird, wird die erste Spezifikation als gleich der zweiten Spezifikation angesehen.

Hierbei sei angemerkt, daß der Begriff "gleich" bedeutet, daß die beiden Spezifikationen zueinander semantisch äquivalent sind. Insbesondere werden "Unterschiede" akzeptiert, deren Einfluß auf die jeweilige Spezifikation ohne Bedeutung im Hinblick auf die Funktion bzw. die Semantik der Spezifikation ist.

Ein Ereignis kann z.B. die Lebensdauer eines Prozesses beschreiben ("Prozeß registrieren", "Prozeß beenden") sowie zur Kommunikation ("Nachricht senden an ...", "Nachricht empfangen von ..:") oder zur Synchronisierung ("warten auf ...", "Bestätigung anfordern von ...") zwischen zwei Prozessen dienen.

Eine Weiterbildung besteht darin, daß durch den ersten Vergleich und den zweiten Vergleich jeweils eine Reihenfolge der Ereignisse überprüft wird. In diesem Fall dient die Reihenfolge als ein Parameter hinsichtlich dessen der Vergleich durchgeführt wird.

Auch ist es eine Weiterbildung, daß die erste Spezifikation und die zweite Spezifikation jeweils Informationsflüsse über eine vorgegebene Zeitdauer umfassen.

Eine andere Weiterbildung besteht darin, daß die erste und die zweite Spezifikation jeweils Nachrichtenflüsse darstellen. Solche Nachrichtenflüsse sind insbesondere in Form eines speziellen Diagramms, einer sogenannten "Message Sequence Chart" (MSC) beschreibbar.

Eine Ausgestaltung besteht darin, daß die erste Spezifikation und die zweite Spezifikation jeweils Datenflüsse eines verteilten Rechnersystems beschreiben. Insbesondere können die Spezifikationen Nebenläufigkeiten (eines Rechnerverbundes) bestimmen. Zweckmäßig können die Spezifikationen in Form von Programmcode, symbolischer Notation (MSC oder ähnliches), textueller Beschreibung, ablaufender bzw. ablauffähiger Programmcode oder auf sonstige Art vorliegen.

Das beschriebene Verfahren eignet sich insbesondere zum automatisierten Testen bzw. zur automatisierten Testfallgenerierung. In einem verteilten System ist es praktisch unmöglich, alle Testfälle abzudecken und explizit auszuprobieren. Dies liegt insbesondere an einer exponentiell steigenden Anzahl der zu testenden Möglichkeiten, die in Abhängigkeit steht zu Prozessen bzw. mehreren auf einem Rechner ablaufenden Prozessen, wobei wiederum eine Vielzahl von Rechnern in einem Rechnerverbund zusammenwirken. Der automatische Testfall wird generiert, indem bestimmte Routinen auf Rechnern bzw. Prozessen ablaufen und zum Beispiel in Form eines Nachrichtenflusses aufgezeichnet werden. Ändert sich die Spezifikation für eine Vielzahl solcher "Testläufe" nicht, so müßten diese Testläufe zueinander semantisch äquivalent sein. Dies kann durch das beschriebene Verfahren automatisch verifiziert werden.

Insbesondere ist es eine Ausgestaltung, daß nach erfolgreichem Vergleich ein Entwurf bzw. eine Steuerung eines technischen Systems durchgeführt wird. Der Entwurf umfaßt zweckmäßig einen Neuentwurf oder eine Anpassung des technischen Systems.

Insbesondere kann das Verfahren im Rahmen der Simulation und/oder Modellierung eingesetzt werden.

Auch ist es eine Ausgestaltung, daß mehrere Verschiedenartigkeiten zwischen der ersten Spezifikation und der zweiten Spezifikation bestimmt werden. Dies ist insbesondere dann von Vorteil, wenn alle Verschiedenartigkeiten automatisch festgestellt und auf geeignete Art für einen Benutzer aufbereitet werden. In so einem Fall ist für den Benutzer klar erkennbar, worin der Unterschied zwischen den Spezifikationen besteht.

Er kann somit ökonomisch rückschließen auf mögliche Fehlerquellen. Dies ist insbesondere hilfreich, da bei semantisch äquivalenten Spezifikationen bzw. Spezifikation, die semantisch äquivalent sein sollten, durch Nachweis einer einzigen Ungleichheit gewährleistet ist, daß diese Spezifikationen zueinander nicht semantisch äquivalent sind.

Insbesondere können die Verschiedenartigkeiten auf vorteilhafte Weise graphisch dargestellt werden.

Auch wird zur Lösung der Aufgabe eine Anordnung zum Vergleich einer ersten Spezifikation mit einer zweiten Spezifikation angegeben, wobei die erste Spezifikation und die zweite Spezifikation jeweils mindestens zwei Prozesse umfassen, deren jeder mindestens zwei Ereignisse enthält. Bei der Anordnung ist eine Prozessoreinheit vorgesehen, die derart eingerichtet ist, daß
a) ein erster Vergleich der Ereignisse der Prozesse der ersten Spezifikation mit den Ereignissen der Prozesse der zweiten Spezifikation durchgeführt wird;
b) ein zweiter Vergleich von Beziehungen zwischen den Ereignissen der Prozesse der ersten Spezifikation mit Beziehungen zwischen den zugehörigen Ereignissen der Prozesse der zweiten Spezifikation durchgeführt wird;
c) eine Verschiedenartigkeit der ersten Spezifikation von der zweiten Spezifikation bestimmt wird, sobald der erste oder der zweite Vergleich eine Ungleichheit ergibt;
d) die erste Spezifikation als gleich der zweiten Spezifikation bestimmt wird, falls der erste und der zweite Vergleich zu keiner Ungleichheit führen.

Auch wird zur Lösung der Aufgabe ein Computerprogramm zum Vergleich einer ersten Spezifikation mit einer zweiten Spezifikation angegeben, wobei die erste Spezifikation und die zweite Spezifikation jeweils mindestens zwei Prozesse umfassen, deren jeder mindestens zwei Ergebnisse enthält. Das Computerprogramm führt bei Ausführung auf einer Prozessoreinheit die folgenden Schritte aus:
a) einen ersten Vergleich der Ereignisse der Prozesse der ersten Spezifikation mit den Ereignissen der Prozesse der zweiten Spezifikation;
b) einen zweiten Vergleich von Beziehungen zwischen den Ereignissen der Prozesse der ersten Spezifikation mit Beziehungen zwischen den zugehörigen Ereignissen der Prozesse der zweiten Spezifikation;
c) eine Bestimmung einer Verschiedenartigkeit der ersten Spezifikation von der zweiten Spezifikation, sobald der erste oder der zweite Vergleich eine Ungleichheit ergibt;
d) eine Bestimmung einer Gleichheit von erster Spezifikation und zweiter Spezifikation, falls der erste und der zweite Vergleich zu keiner Ungleichheit führen.

Die Anordnung ist insbesondere geeignet zur Durchführung des erfindungsgemäßen Verfahrens bzw. zum Ablauf des erfindungsgemäßen Computerprogrammes oder einer seiner vorstehend erläuterten Weiterbildungen.

Hierbei sei nochmals angemerkt, daß eine Ungleichheit bzw. Verschiedenartigkeit zwischen den Spezifikationen von der Art ist, daß die semantische Äquivalenz gemäß obigen Ausführungen nicht gewährleistet ist. Es gibt eine formale "Ungleichheit", die nicht als Ungleichheit oder Verschiedenartigkeit in obigem Sinne zählt, da sie z.B. nur eine unterschiedliche Darstellung (Form) der Spezifikationen begründet (d.h. unterschiedliche Reihenfolge genau der einander zugehörigen Ereignisse der Prozesse der beiden Spezifikationen, die gemäß dieser Spezifikationen nebenläufig auftreten können), darüber hinaus aber immer noch semantische Äquivalenz gewährleistet.

Ausführungsbeispiele der Erfindung werden nachfolgend anhand der Zeichnung dargestellt und erläutert.

Es zeigen
- Fig.1: ein Blockdiagramm mit Schritten eines Verfahrens zum Vergleich einer ersten Spezifikation mit einer zweiten Spezifikation;
- Fig.2: eine erste Spezifikation;
- Fig.3: eine zweite Spezifikation;
- Fig.4: eine Prozessoreinheit.

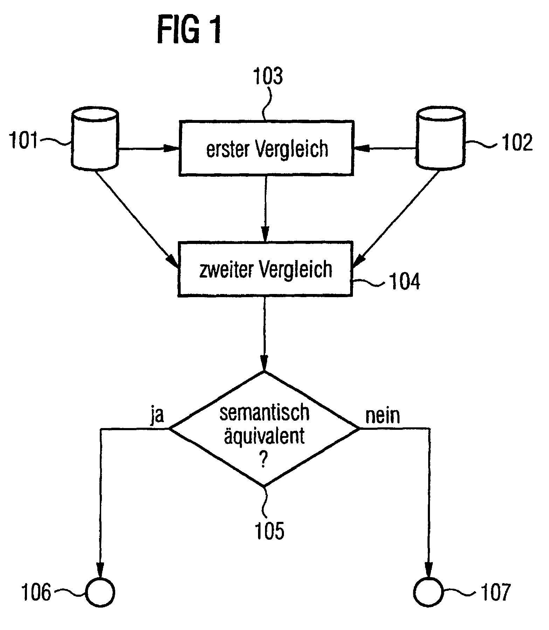

In **Fig.1** ist ein Blockdiagramm mit logischen Verfahrensschritten zum Vergleich einer ersten Spezifikation 101 mit einer zweiten Spezifikation 102 dargestellt. In einem Block 103 erfolgt ein erster Vergleich, der hinsichtlich der Ereignisse der Prozesse die erste Spezifikation 101 mit der zweiten Spezifikation 102 vergleicht. Hinsichtlich der Beziehungen zwischen den einander zugehörigen Ereignisse der Prozesse wird darauf aufbauend die erste Spezifikation 101 mit der zweiten Spezifikation 102 in einem zweiten Vergleich 104 auf Unterschiede hin untersucht. In einem Block 105 erfolgt eine Abfrage, die prüft, ob die beiden Spezifikationen 101 und 102 semantisch äquivalent sind, das heißt, daß sie unabhängig von ihren jeweiligen Ausprägungen die gleiche Funktionalität haben. Ist dies der Fall, sind die Spezifikation 101 und 102 semantisch äquivalent, das Verfahren terminiert in einem Schritt 106, im anderen Fall terminiert das Verfahren in einem Schritt 107. Optional kann in dem Schritt 107 noch einen Darstellung der Unterschiede zwischen der ersten Spezifikation 101 und der zweiten Spezifikation 102 erfolgen.

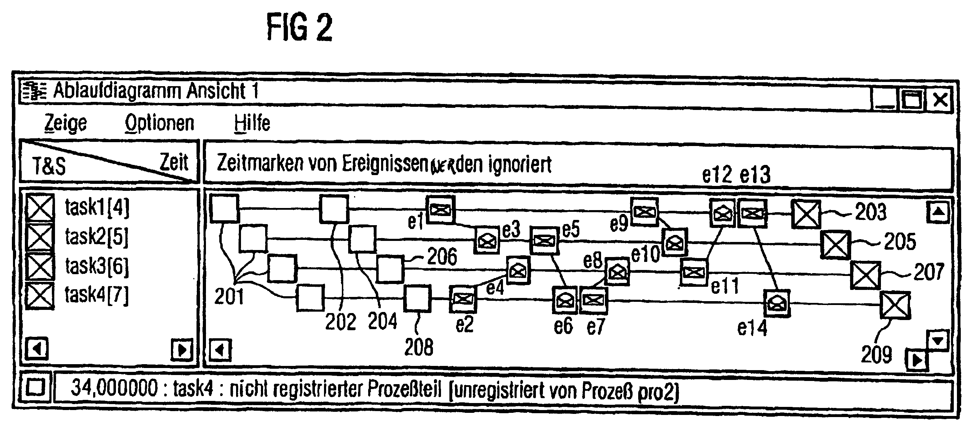

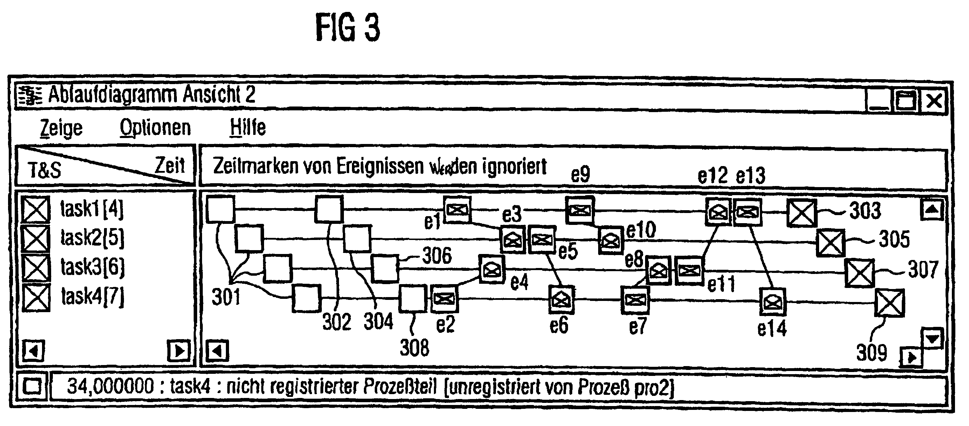

In **Fig.2** und **Fig.3** sind jeweils eine erste Spezifikation und eine zweite Spezifikation dargestellt. In dem linken Ausschnittsfenster von Fig.2 und Fig.3 sind jeweils vier verschiedene Prozesse ("Tasks") task1...4 dargestellt. Im rechten Teil von Fig.2 und Fig.3 sind jeweils über einer Zeitachse, die von links nach rechts verläuft, verschiedene Ereignisse eᵢ (i= 1...14) dargestellt. Dabei bezeichnet eᵢ (i= 1...14) jeweils zugehörige Ereignisse in den beiden Spezifikationen, d.h. bei eᵢ (i= 1...14) handelt es sich in der ersten und in der zweiten Spezifikation jeweils um dasselbe Ereignis. Diese Zuordnung einander zugehöriger Ereignisse der beiden Spezifikationen erfolgt implizit in dem ersten Vergleich.

Hierbei sei angemerkt, daß die Prozesse hierarchisch in unterschiedliche Prozeßstrukturen aufgeteilt sein können: ein Netzwerk mit vielen Rechnern, deren jeder eine Vielzahl von Prozessen aufweist; die Prozesse können wiederum in einzelne Tasks (die Tasks als kleinste Einheit mit sequentiellem Kontrollfluß) unterteilt sein. Diese Nomenklatur kann beliebig unterteilt und hierarchisiert werden.

Das Symbol 201 in Fig.2 deutet an, daß der die einzelnen Prozesse task1...task4 umfassende Prozessor gestartet wurde (ebenso Symbol 301 in Fig.3). Der Prozeß task1 wird mit einem Symbol 202 gestartet und mit einem Symbol 203 beendet. Der Prozeß task2 wird mit einem Symbol 204 gestartet und mit einem Symbol 205 beendet, der Prozeß task3 wird mit einem Symbol 206 gestartet und mit einem Symbol 207 beendet, der Prozeß task4 wird mit einem Symbol 208 gestartet und mit einem Symbol 209 beendet. Analog gilt zu Fig.3: Symbol 302 startet und Symbol 303 beendet den Prozeß task1, Symbol 304 startet und Symbol 305 beendet Prozeß task2, Symbol 306 startet und Symbol 307 beendet Prozeß task3 und Symbol 308 startet und Symbol 309 beendet Prozeß task4.

Dazwischen liegen die Ereignisse e₁ bis e₁₄. Ein Symbol mit geschlossenem Briefumschlag stellt ein Absenden einer Nachricht und ein Symbol mit geöffnetem Briefumschlag ein Empfangen der abgeschickten Nachricht dar. Insbesondere treten jetzt zwischen den Prozessen task1 bis task4 Ereignisse (hier: Kommunikationsereignisse) auf, die in Form von Verbindungen zwischen den Prozessen in Fig.2 und Fig.3 dargestellt sind. So wird beispielsweise in Fig.2 das Ereignis e₁ dadurch bestimmt, daß eine Nachricht von dem Prozeß task1 zu dem Prozeß task2 geschickt und dort empfangen wird (als Ereignis e₃). Trotz der vielen offensichtlichen Unterschiede zwischen Fig.2 und Fig.3 betreffend die Reihenfolge der einzelnen Ereignisse e₁ bis e₁₄ sind dennoch die beiden Darstellungen von Fig.2 und Fig.3 semantisch äquivalent. Die Reihenfolge variiert nämlich nur bei den Ereignissen, die nebenläufig auftreten können. Diese ergeben sich aus der Spezifikation und sind z.B. die Ereignisse e₁ und e₂ oder e₃ und e₄ oder e₇ und e₉ oder e₈ und e₁₀.

So wird in dem ersten Vergleich bestimmt, ob die Reihenfolgen entlang eines Prozeßablaufes zwischen den beiden Spezifikationen (Fig.2 und Fig.3) semantisch äquivalent sind. Beginnt man den Vergleich mit Prozeß task1 (Fig.2) und Prozeß task1 (Fig.3), so ergibt sich, daß eine Reihenfolge der Ereignisse für diesen Prozeß task1 gleich sind:
Fig.2: task1: e₁, e₉, e₁₂, e₁₃
Fig.3: task1: e₁, e₉, e₁₂, e₁₃.

Somit ergibt sich im Hinblick auf den ersten Vergleich, der den strukturellen Ablauf, insbesondere die Reihenfolge, im Prozeßablauf zweier Spezifikationen miteinander vergleicht, Gleichheit (Identität, und damit auch semantische Äquivalenz) zwischen dem Prozeß task1 der ersten Spezifikation aus Fig.2 und dem Prozeß task1 der zweiten Spezifikation aus Fig.3. Gleiches gilt für die Prozesse task2, task3 und task4.

Beim zweiten Vergleich wird festgestellt, ob die Beziehungen zwischen den zugehörigen Ereignissen der Prozesse in beiden Spezifikationen zu einer semantisch Äquivalenz führen oder nicht. Eine Betrachtung der Beziehung zwischen den Prozessen task1 und task2 in Fig.2 ergibt, daß zwischen den Ereignissen e₁ und e₃ eine solche Beziehung ("Querverbindung") in Form einer Kommunikationsverbindung besteht. Demzufolge ist wichtig, daß das Ereignis e₅, das nach dem Ereignis e₃ in der zeitlichen Abfolge eintritt, auch nach dem Ereignis e₁ eintritt. Dies ist in der zweiten Spezifikation in Fig.3 der Fall. Allerdings findet in Fig.2 zwischen den Ereignissen e₂ und e₅ (Prozeß: task2) ein Ereignis e₄ auf dem Prozeß task3 zeitlich nach dem Ereignis e₃ (Prozeß: task2) statt, während in Fig.3 der Zeitpunkt für dieses Ereignis e₄ vor dem Ereignis e₃ liegt. Durch die Betrachtung einer Gesamtvermaschung ergibt sich hierbei, daß dies im Hinblick auf eine semantische Äquivalenz beider Spezifikationen aus Fig.2 und Fig.3 unschädlich ist. Das Ereignis e₄ muß lediglich vor dem Ereignis e8 stattfinden.

Somit kann man aus den Figuren 2 und 3 semantische Äquivalenz unter Berücksichtigung aller (der teilweise nebenläufigen) Ereignisse e₁ bis e₁₄ herleiten. Der zweite Vergleich ergibt, daß die auf den ersten Blick unterschiedliche Reihenfolge der Ereignispaare (e₁, e₃) und (e₂, e₄) bzw. (e₇, e₈) und (e₉, e₁₀) genau die nebenläufigen Ereignispaare betrifft; die verschiedenen Reihenfolgen sind hinsichtlich der semantischen Äquivalenz der beiden Spezifikationen unschädlich.

Ermittelt man eine Vielzahl von Darstellungen gemäß Fig.2 oder Fig.3, so kann im Rahmen einer automatischen Testdurchführung bzw. Testfallgenerierung bestimmt werden, ob es einen Fall gibt, in dem eine Verschiedenheit auftritt, obwohl eigentlich eine semantische Äquivalenz gefordert würde. In so einem Fall kann man quasi vollautomatisch Testläufe generieren, Nachrichten aufzeichnen und anschließend auf semantische Äquivalenz hin überprüfen. Sollen jeweils zwei Spezifikationen semantisch äquivalent sein, so resultiert aus der Verschiedenheit zumeist ein Fehler, der zudem äußerst übersichtlich aufbereitet werden kann und somit schnell zu finden und zu beseitigen ist.

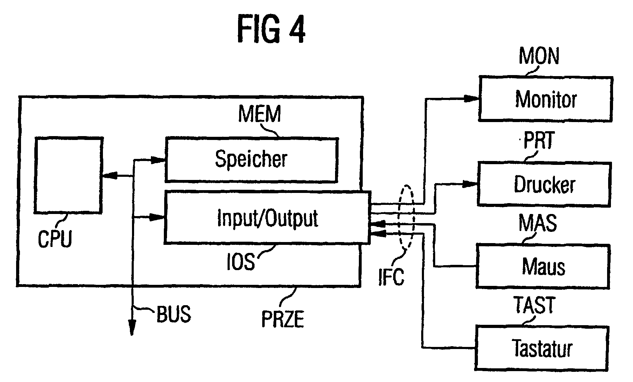

In **Fig.4** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

### Literaturverzeichnis:

[1] K.C. Tai, R.H. Carver: Testing of distributed programs; in A.Zomaya (ed.): Handbook of Parallel and Distributed Computing; McGraw Hill; 1995; pp. 956-979

## Patentansprüche

1. Verfahren zum Vergleich einer ersten Spezifikation mit einer zweiten Spezifikation, wobei die erste Spezifikation und die zweite Spezifikation jeweils mindestens zwei Prozesse umfassen, deren jeder mindestens zwei Ereignisse enthält,
a) bei dem ein erster Vergleich der Ereignisse der Prozesse der ersten Spezifikation mit den Ereignissen der Prozesse der zweiten Spezifikation durchgeführt wird;
b) bei dem ein zweiter Vergleich von Beziehungen zwischen den Ereignissen der Prozesse der ersten Spezifikation mit Beziehungen zwischen den zugehörigen Ereignissen der Prozesse der zweiten Spezifikation durchgeführt wird;
c) bei dem eine Verschiedenartigkeit der ersten Spezifikation von der zweiten Spezifikation bestimmt wird, wenn der erste oder der zweite Vergleich eine Ungleichheit ergibt;
d) bei dem die erste Spezifikation als gleich der zweiten Spezifikation bestimmt wird, falls der erste und der zweite Vergleich zu keiner Ungleichheit führen.

2. Verfahren nach Anspruch 1,
bei dem durch den ersten Vergleich und den zweiten Vergleich eine Reihenfolge der Ereignisse überprüft wird.

3. Verfahren nach Anspruch 1 oder 2,
bei dem die erste Spezifikation und die zweite Spezifikation jeweils Informationsflüsse über der Zeit umfassen.

4. Verfahren nach Anspruch 3,
bei dem die erste und die zweite Spezifikation Nachrichtenflüsse darstellen.

5. Verfahren nach einem der vorhergehenden Ansprüche,
bei dem die erste Spezifikation und die zweite Spezifikation Datenflüsse eines verteilten Rechnersystems beschreiben.

6. Verfahren nach einem der vorhergehenden Ansprüche,
bei dem die erste Spezifikation und die zweite Spezifikation jeweils Nebenläufigkeiten beschreiben.

7. Verfahren nach einem der vorhergehenden Ansprüche
zum automatischen Testen.

8. Verfahren nach einem der vorhergehenden Ansprüche,
bei dem bei erfolgreichem Vergleich ein Entwurf bzw. eine Steuerung eines technischen Systems durchgeführt wird.

9. Verfahren nach einem der vorhergehenden Ansprüche,
bei dem mehrere Verschiedenartigkeiten zwischen der ersten Spezifikation und der zweiten Spezifikation bestimmt werden.

10. Verfahren nach Anspruch 9,
bei dem die mehreren Verschiedenartigkeiten dargestellt werden.

11. Anordnung zum Vergleich einer ersten Spezifikation mit einer zweiten Spezifikation, wobei die erste Spezifikation und die zweite Spezifikation jeweils mindestens zwei Prozesse umfassen, deren jeder mindestens zwei Ereignisse enthält,
bei der eine Prozessoreinheit vorgesehen ist, die derart eingerichtet ist, daß
a) ein erster Vergleich der Ereignisse der Prozesse der ersten Spezifikation mit den Ereignissen der Prozesse der zweiten Spezifikation durchgeführt wird;
b) ein zweiter Vergleich von Beziehungen zwischen den Ereignissen der Prozesse der ersten Spezifikation mit Beziehungen zwischen den zugehörigen Ereignissen der Prozesse der zweiten Spezifikation durchgeführt wird;
c) eine Verschiedenartigkeit der ersten Spezifikation von der zweiten Spezifikation bestimmt wird, sobald der erste oder der zweite Vergleich eine Ungleichheit ergibt;
d) die erste Spezifikation als gleich der zweiten Spezifikation bestimmt wird, falls der erste und der zweite Vergleich zu keiner Ungleichheit führen.

12. Computerprogramm zum Vergleich einer ersten Spezifikation mit einer zweiten Spezifikation, wobei die erste Spezifikation und die zweite Spezifikation jeweils mindestens zwei Prozesse umfassen, deren jeder mindestens zwei Ereignisse enthält, welches Computerprogramm bei Ausführung auf einer Prozessoreinheit folgende Schritte umfaßt:
a) einen ersten Vergleich der Ereignisse der Prozesse der ersten Spezifikation mit den Ereignissen der Prozesse der zweiten Spezifikation;
b) einen zweiten Vergleich von Beziehungen zwischen den Ereignissen der Prozesse der ersten Spezifikation mit Beziehungen zwischen den zugehörigen Ereignissen der Prozesse der zweiten Spezifikation;
c) eine Bestimmung einer Verschiedenartigkeit der ersten Spezifikation von der zweiten Spezifikation, sobald der erste oder der zweite Vergleich eine Ungleichheit ergibt;
d) eine Bestimmung einer Gleichheit von erster Spezifikation und zweiter Spezifikation, falls der erste und der zweite Vergleich zu keiner Ungleichheit führen.

## Claims

1. Method for comparing a first specification with a second specification, with the first specification and the second specification each covering at least two processes, each of which includes at least two events,
a) in which a first comparison is carried out of the events in the processes in the first specification with the events in the processes in the second specification;
b) in which a second comparison is carried out of relationships between the events in the processes in the first specification with relationships between the associated events in the processes in the second specification;
c) in which the first specification is determined to be different to the second specification if the first or the second comparison results in a dissimilarity; and
d) in which the first specification is determined to be the same as the second specification if the first and the second comparisons do not lead to any differences.

2. Method according to Claim 1,
in which the first comparison and the second comparison are used to check a sequence of the events.

3. Method according to Claims 1 or 2,
in which the first specification and the second specification each include information flows with respect to time.

4. Method according to Claim 3,
in which the first specification and the second specification represent message flows.

5. Method according to one of the preceding claims,
in which the first specification and the second specification
describe data flows in a distributed computer system.

6. Method according to one of the preceding claims,
in which the first specification and the second specification each describe concurrent activities.

7. Method according to one of the preceding claims for automatic testing.

8. Method according to one of the preceding claims,
in which, if the comparison is successful, a technical system is designed and/or controlled.

9. Method according to one of the preceding claims,
in which a number of dissimilarities are determined between the first specification and the second specification.

10. Method according to Claim 9,
in which the number of dissimilarities are displayed.

11. Arrangement for comparing a first specification with a second specification, with the first specification and the second specification each covering at least two processes, each of which includes at least two events,
in which a processor unit is provided, which is set up such that:
a) a first comparison is carried out of the events in the processes in the first specification with the events in the processes in the second specification;
b) a second comparison is carried out of relationships between the events in the processes in the first specification with relationships between the associated events in the processes in the second specification;
c) the first specification is determined to be different to the second specification as soon as the first or the second comparison results in a dissimilarity; and
d) the first specification is determined to be the same as the second specification if the first and the second comparisons do not lead to any differences.

12. Computer program for comparing a first specification with a second specification, with the first specification and the second specification each covering at least two processes, each of which includes at least two events, which computer program comprises the following steps when run in a processor unit:
a) a first comparison is carried out of the events in the processes in the first specification with the events in the processes in the second specification;
b) a second comparison is carried out of relationships between the events in the processes in the first specification with relationships between the associated events in the processes in the second specification;
c) the first specification is determined to be different to the second specification as soon as the first or the second comparison results in a dissimilarity; and
d) the first specification is determined to be the same as the second specification if the first and the second comparisons do not lead to any differences.

## Revendications

1. Procédé destiné à la comparaison entre une première spécification et une deuxième spécification, la première spécification et la deuxième spécification comportant chacune au moins deux processus qui renferment chacun au moins deux événements,
a) dans lequel on exécute une première comparaison entre les événements des processus de la première spécification et les événements des processus de la deuxième spécification;
b) dans lequel on exécute une deuxième comparaison entre les rapports entre les événements des processus de la première spécification et les rapports entre les événements correspondants des processus de la deuxième spécification;
c) dans lequel on détermine une diversité entre la première spécification et la deuxième spécification dès que la première ou la deuxième comparaison dégagent une inégalité;
d) dans lequel on établit que la première spécification est identique à la deuxième spécification, si la première et la deuxième comparaison ne conduisent à aucune inégalité.

2. Procédé selon la revendication 1
dans lequel on vérifie, grâce à la première comparaison et à la deuxième comparaison, un ordre de succession des événements.

3. Procédé selon la revendication 1 ou 2
dans lequel la première spécification et la deuxième spécification renferment l'une et l'autre des flux d'informations en fonction du temps.

4. Procédé selon la revendication 3
dans lequel la première spécification et la deuxième spécification représentent des flux de messages.

5. Procédé selon l'une des revendications précédentes
dans lequel la première spécification et la deuxième spécification décrivent des flux de données d'un système informatique réparti.

6. Procédé selon l'une des revendications précédentes
dans lequel la première spécification et la deuxième spécification décrivent chacune des cycles de traitement en second plan.

7. Procédé selon l'une des revendications précédentes
destiné à un test automatique.

8. Procédé selon l'une des revendications précédentes
dans lequel, en cas de comparaison réussie, on exécute un projet ou une commande d'un système technique.

9. Procédé selon l'une des revendications précédentes
dans lequel on détermine plusieurs diversités entre la première spécification et la deuxième spécification.

10. Procédé selon la revendication 9
dans lequel les plusieurs diversités sont représentées.

11. Dispositif destiné à comparer une première spécification à une deuxième spécification, la première spécification et la deuxième spécification comportant chacune au moins deux processus qui renferment chacun au moins deux événements,
dans lequel est prévue une unité à processeur conçue de telle sorte que
a) on exécute une première comparaison entre les événements des processus de la première spécification et les événements des processus de la deuxième spécification;
b) on exécute une deuxième comparaison entre les rapports entre les événements des processus de la première spécification et les rapports entre les événements correspondants des processus de la deuxième spécification;
c) on détermine une diversité entre la première spécification et la deuxième spécification dès que la première ou la deuxième comparaison dégagent une inégalité;
d) on établit que la première spécification est identique à la deuxième spécification, si la première et la deuxième comparaison ne conduisent à aucune inégalité.

12. Logiciel d'ordinateur destiné à comparer une première spécification à une deuxième spécification, la première spécification et la deuxième spécification comportant chacune au moins deux processus qui renferment chacun au moins deux événements, ce logiciel d'ordinateur comportant, lors de son exécution sur une unité à processeur, les étapes suivantes:
a) une première comparaison entre les événements des processus de la première spécification et les événements des processus de la deuxième spécification;
b) une deuxième comparaison entre les rapports entre les événements des processus de la première spécification et les rapports entre les événements correspondants des processus de la deuxième spécification;
c) une détermination d'une diversité entre la première spécification et la deuxième spécification dès que la première ou la deuxième comparaison dégagent une inégalité;
d) une détermination d'une égalité entre la première spécification et la deuxième spécification, si la première et la deuxième comparaison ne conduisent à aucune inégalité.
